# EUROPÄISCHE PATENTSCHRIFT

(11) **EP 3 665 444 B1**
(45) Veröffentlichungstag und Bekanntmachung des Hinweises auf die Patenterteilung: **01.09.2021**
(21) Anmeldenummer: 18745494.7
(22) Anmeldetag: 04.07.2018
(51) Int. Cl.: G01F 1/00, G01F 23/00, G01F 1/696

(54) **MESSEINRICHTUNG ZUR ERMITTLUNG EINER EIN FLUID UND/ODER EINE FLUIDSTRÖMUNG BETREFFENDEN FLUIDGRÖSSE**
MEASUREMENT DEVICE FOR DETERMINING A FLUID VARIABLE RELATING TO A FLUID AND/OR A FLUID FLOW
DISPOSITIF DE MESURE PERMETTANT DE DÉTERMINER UNE GRANDEUR CONCERNANT UN FLUIDE ET/OU UN DÉBIT DE FLUIDE

(30) Priorität: 09.08.2017 DE 102017007494
(43) Veröffentlichungstag der Anmeldung: 17.06.2020
(73) Patentinhaber: Diehl Metering GmbH, 91522 Ansbach (DE)
(72) Erfinder: NICKL, Stefan, 90547 Stein (DE)
(74) Vertreter: Diehl Patentabteilung
(86) Internationale Anmeldenummer: PCT/EP2018/000342
(87) Internationale Veröffentlichungsnummer: WO 2019/029837

(56) Entgegenhaltungen:
- DE-A1- 19 609 579
- US-A- 4 934 189
- US-A- 5 167 152
- US-A- 5 416 430
- US-B2- 7 535 235

## Beschreibung

Die Erfindung betrifft eine Messeinrichtung zur Ermittlung einer ein Fluid und/oder eine Fluidströmung des Fluids bestreffenden Fluidgröße, umfassend eine Recheneinrichtung und ein Sensormodul oder mehrere Sensormodule zur Erfassung einer jeweiligen Sensorgröße, in Abhängigkeit der die Fluidgröße durch die Recheneinrichtung ermittelbar ist, wobei das Sensormodul oder die Sensormodule über jeweils wenigstens zwei Adern an jeweiligen Sensorkontakten der Recheneinrichtung angeschlossen ist oder sind.

Entsprechende Messeinrichtungen können beispielsweise Durchflusszähler sein, die eine Durchflussmenge eines Gases oder einer Flüssigkeit erfassen. Wird eine solche Durchflusszählung mit Temperatursensoren zur Erfassung einer Vorlauf- und Rücklauftemperatur ergänzt, kann die Messeinrichtung dazu dienen, eine bereitgestellte Wärmemenge zu erfassen. Eine solche Messeinrichtung kann mehrere Komponenten oder Module umfassen. Neben einer Recheneinrichtung, die die Datenverarbeitung und/oder Speicherung durchführen kann, können ein Sensormodul oder mehrere Sensormodule genutzt werden, die Sensordaten, aus denen die Fluidgröße berechnet wird, bereitstellen. Die Sensormodule können über entsprechende Leitungen an der Recheneinrichtung angeschlossen werden.

Bei der beschriebenen Anordnung kann es problematisch sein, dass Störungen, beispielsweise hochfrequente Spannungs- oder Strompulse, in die jeweilige Leitung eingekoppelt werden, die die Recheneinrichtung mit dem Sensormodul oder den Sensormodulen verbinden. Hierdurch kann die Messqualität verringert werden und unter Umständen können sogar Beschädigungen der Messeinrichtung auftreten. Zur Beseitigung solcher Störungen werden bislang zwei Ansätze verfolgt. Zum einen können Ferritkerne an Verbindungsleitungen genutzt werden, um hochfrequente Störungen zu bedämpfen bzw. zu filtern. Zum anderen ist es möglich, eine zur Kommunikation mit dem jeweiligen Sensormodul genutzte Signalmasse unmittelbar mit einem messeinrichtungsextern bereitgestellten Erdpotential, das beispielsweise über eine das Fluid führende Rohrleitung zugeführt wird, zu verbinden. Eine ausreichende Entstörung der Messeinrichtung mithilfe dieser Ansätze kann relativ aufwendig sein und es können nicht alle Störungen bedämpft werden. Eine andere Lösung für dieses Problem ist in DE 196 09 579 A1 offenbart.

Der Erfindung liegt somit die Aufgabe zugrunde, die Entstörung einer solchen Messeinrichtung weiter zu verbessern bzw. zu vereinfachen.

Die Aufgabe wird erfindungsgemäß durch eine Messeinrichtung der eingangs genannten Art gelöst, wobei wenigstens einer der Sensorkontakte über eine jeweilige Kapazität mit einem auf einem Referenzpotential, insbesondere dem Erdpotential, liegenden Referenzschaltungsabschnitt gekoppelt ist, der bezüglich Gleichstrom gegenüber den Sensorkontakten isoliert ist.

Es wird somit vorgeschlagen, die Sensorkontakte und somit die zur Verbindung des Sensormoduls bzw. der Sensormodule genutzten Adern zwar bezüglich Gleichstrom von dem Referenzpotential zu isolieren, jedoch zumindest einen der Sensorkontakte, vorzugsweise alle Sensorkontakte, kapazitiv mit dem Referenzpotential zu koppeln. Dies ermöglicht es hochfrequente Störungen auf den Adern zum Referenzpotential bzw. dem Erdpotential hin abzuführen, ohne dass die näherungsweise gleichspannungsartigen bzw. niederfrequenten Messsignale hierdurch negativ beeinflusst werden. Somit können nicht nur die Signalmassen der von den Sensormodulen bereitgestellten Signale entstört werden, sondern auch Signalleitungen, die auf einem definierten Potential liegen müssen, um Signale übertragen zu können. Dadurch, dass die Entstörung über die Sensorkontakte und somit zentral über die Recheneinrichtung erfolgt, kann eine Bildung von Erdschleifen oder Ähnlichem vermieden werden.

Die Isolierung des Referenzschaltungsabschnitts gegenüber den Sensorkontakten ist vorzugsweise so gewählt, dass auch bei höheren Spannungen von beispielsweise mehreren zehn oder hundert Volt ein Gleichstromwiderstand von mehr als einem Megaohm resultiert. Die jeweilige Kapazität zur Kopplung des Sensorkontakts mit dem Referenzschaltungsabschnitt kann als separates Bauteil, insbesondere als Kondensator, realisiert sein. Die Kapazität kann jedoch z. B. auch dadurch realisiert werden, dass sich leitende Abschnitte des Referenzschaltungsabschnitts und eines mit dem jeweiligen Sensorkontakt verbundenen Schaltungsabschnitts flächig gegenüberliegen.

Zur Begrenzung des Stromflusses, der zum Referenzpotential hin abgeführt werden kann, kann ein Widerstand in Serie zu der Kapazität geschaltet sein. Ergänzend oder alternativ kann auch eine Induktivität in Serie zu der Kapazität geschaltet sein, beispielsweise um einen Saugkreis auszubilden, mit dem gezielt Störungen einer bestimmten Frequenz unterdrückt werden können.

Als Referenzpotential kann das Erdpotential des leitenden Erdreichs im Bereich der Messeinrichtung genutzt werden. Insbesondere kann das Erdpotential jenem elektrischen Potential entsprechen, auf dem sich ein leitfähiges Fluid bzw. ein leitfähiges Messrohr, das das Fluid führt, befindet. Das Fluid kann eine Flüssigkeit, beispielsweise Wasser, oder ein Gas sein.

Das Sensormodul oder eines der Sensormodule weisen eine Sensorkomponente auf, die im Einbauzustand leitend mit dem messeinrichtungsextern bereitgestellten Referenpotential gekoppelt ist, wobei die Sensorkomponente über eine weitere Ader leitend mit dem Referenzschaltungsabschnitt der Recheneinrichtung gekoppelt ist. Die weitere Ader kann über einen Kontaktpunkt leitend mit dem Referenzschaltungsabschnitt verbunden sein. Störungen, die auf eine Ader eingekoppelt werden, die mit einem der Sensorkontakte verbunden ist, können somit zunächst über diese Ader zu der Recheneinrichtung und dort über die zugeordnete Kapazität auf den Referenzschaltungsabschnitt geführt werden, von wo aus sie über die weitere Ader über das messeinrichtungsextern bereitgestellte Referenzpotential abgeführt werden können. Die Verbindung zwischen der weiteren Ader und der Sensorkomponente und/oder dem Referenzschaltungsabschnitt ist niederohmig.

Die Sensorkomponente bildet zumindest einen Abschnitt eines Gehäuses des Sensormoduls und/oder eines das Fluid aufnehmenden oder von dem Fluid durchströmbaren Messrohrs. Insbesondere wenn ein leitfähiges, insbesondere metallisches, Messrohr verwendet wird und/oder wenn das Fluid selbst leitend ist, kann das Referenzpotential über das leitfähige Fluid bzw. das Messrohr bereitgestellt werden.

Die Sensorkomponente kann, insbesondere als Teil des Gehäuses des Sensormoduls, beispielsweise mit einem leitfähigen Messrohr oder einer anderen leitfähigen, auf dem Referenzpotential liegenden Komponente verbunden, beispielsweise verschraubt, werden. Durch die Ausbildung der Sensorkomponente als Gehäuseabschnitt bzw. Messrohrabschnitt ist die Messeinrichtung mit geringem technischen Aufwand niederohmig mit einem messeinrichtungsextern bereitgestellten Referenzpotential gekoppelt.

Wie vorangehend erläutert, kann das Referenzpotential des Referenzschaltungsabschnitts vorgegeben werden, indem der Referenzschaltungsabschnitt über eine weitere Ader leitend mit einer Sensorkomponente eines Sensormoduls verbunden ist, die im Einbauzustand leitend mit dem messeinrichtungsextern bereitgestellten Referenzpotential gekoppelt ist. Diese weitere Ader und die vorangehend diskutierten Adern, die dieses Sensormodul mit den Sensorkontakten der Recheneinrichtung verbinden, können Teil einer gemeinsamen Leitung sein, die dieses Sensormodul mit der Recheneinrichtung verbindet. Die weitere Ader kann hierbei den Schirm der Leitung bilden, um jene Adern, die das Sensormodul mit den Sensoranschlüssen verbinden, gegen externe Störungen abzuschirmen. Somit kann das die Sensorkomponente aufweisende Sensormodul über eine Leitung mit der Recheneinrichtung gekoppelt sein, die die das Sensormodul mit den Sensorkontakten verbindenden Adern und die weitere Ader umfasst. Die weitere Ader kann eine Abschirmung für jene Adern bilden, die das Sensormodul mit den Sensorkontakten verbindenden. Die weitere Ader kann recheneinrichtungsseitig mit einem Kontaktpunkt des Referenzschaltungsabschnitts und sensoreinrichtungsseitig mit einem Kontaktpunkt der Sensorkomponente, z.B. einem Gehäuse des Sensormoduls, verbunden sein. Beispielsweise kann die weitere Ader im Bereich der Leitung hohlzylinderförmig ausgeführt sein und die anderen Adern können innerhalb dieses Hohlzylinders geführt sein. Durch die Bildung einer Abschirmung durch die weitere Ader kann ein Einkoppeln von Störungen in die mit den Sensorkontakten verbundenen Adern bereits weitgehend unterdrückt werden. In die weitere Ader eingekoppelte Störungen können direkt über die niederohmige Verbindung mit dem messeinrichtungsextern bereitgestellten Referenzpotential abgeführt werden. Soweit trotz der Abschirmung Störungen in jene Adern eingekoppelt werden, die das Sensormodul mit den Sensorkontakten verbinden, können diese, wie bereits erläutert, über die Kapazitäten abgeführt werden.

Die Messeinrichtung kann einen Durchflusssensor und/oder wenigstens einen Temperatursensor als Sensormodule umfassen. Der Durchflusssensor kann beispielsweise ein thermischer Durchflusssensor, ein Flügelradsensor oder ein Ultraschallsensor sein. Als Temperatursensor kann insbesondere ein Messwiderstand, beispielsweise ein Platinwiderstand, genutzt werden, wobei über die Adern ein Spannungsabfall am Temperatursensor erfasst werden kann. Zum Aufbau eines Wärmezählers können jeweils ein vorlaufseitiger und ein rücklaufseitiger Temperatursensor und ein Durchflusszähler genutzt werden. Das Erdpotential kann beispielsweise über das Gehäuse eines Temperatursensors bereitgestellt werden, das in ein Messrohr eingeschraubt werden kann, um die Temperatur des Fluids zu erfassen.

Der Durchflusssensor und einer der Temperatursensoren können als gemeinsame Einheit an dem Messrohr angeordnet werden, wobei ein weiterer Temperatursensor beabstandet hiervon angeordnet wird, um eine verbleibende Temperaturmessung zur Erfassung einer zu- oder abgeführten Wärme durchzuführen.

Die Recheneinrichtung kann dazu eingerichtet sein, einen Durchfluss von Fluid oder eine durch das Fluid transportierte Energiemenge als Fluidgröße zu ermitteln. Eine Energiemenge kann beispielsweise in Abhängigkeit eines Temperaturunterschieds zwischen zwei durch verschiedene Temperatursensoren erfassten Temperaturen und einer Durchflussmenge, die über einen Durchflusssensor erfasst werden kann, ermittelt werden.

Ein Wärmezähler kann beispielsweise zwei Temperatursensoren zur Messung der Vorlauf- und Rücklauftemperatur in einem Heizkreis aufweisen. Einer der beiden Temperatursensoren kann über ein kurzes Kabel mit der Recheneinrichtung verbunden und direkt in ein Anschlussgehäuse eingeschraubt werden. Dieses Kabel kann geschirmt ausgeführt werden, wobei der Schirm niederohmig mit dem Anschlussgehäuse verbunden wird, um den Wärmezähler an das Erdpotential anzubinden. Die einzelnen Ein- und Ausgänge der Recheneinrichtung werden kapazitiv über ein Referenzschaltungsabschnitt mit diesem Schirm gekoppelt, um kabelgebundene Störungen über den Schirm auf das Erdpotential abzuleiten.

In der erfindungsgemäßen Messeinrichtung ist jeder der Sensorkontakte über eine jeweilige Kapazität mit dem Referenzschaltungsabschnitt gekoppelt. Somit können kabelgebundene Störungen aller zur Verbindung der Sensormodule genutzten Adern abgeführt werden. Für wenigstens eines der Sensormodule können sowohl eine Ader, die als Signalmasse dient, als auch wenigstens eine weitere Ader, die ein Steuersignal oder Messsignal führt, über eine jeweilige Kapazität mit dem Referenzschaltungsabschnitt gekoppelt sein.

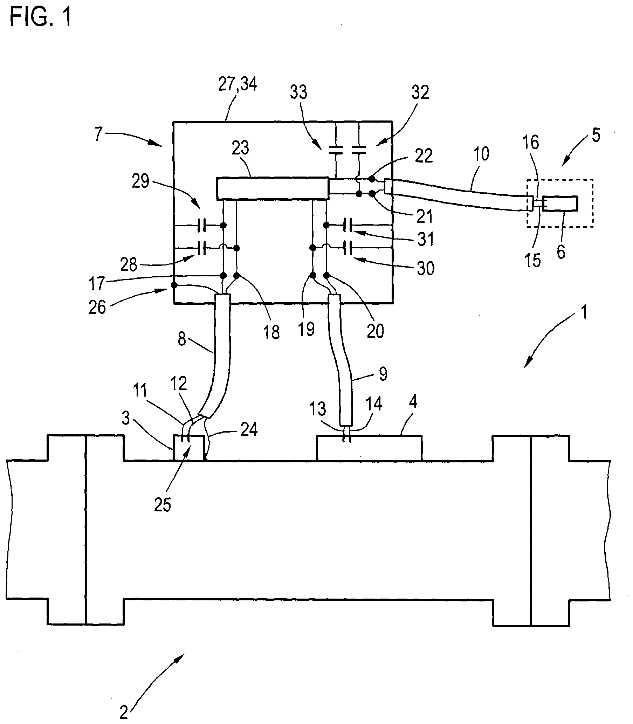

Weitere Vorteile und Einzelheiten der vorliegenden Erfindung ergeben sich aus dem folgenden Ausführungsbeispiel. Die einzige Figur zeigt hierbei ein Ausführungsbeispiel einer erfindungsgemäßen Messeinrichtung.

Die Figur zeigt eine Messeinrichtung 1, die im Beispiel zur Ermittlung einer über ein Fluid bereitgestellten Wärmemenge dient. Das Fluid wird vorlaufseitig über ein Messrohr 2 zugeführt. Im Bereich des Vorlaufs wird durch ein erstes Sensormodul 3 die Temperatur des Fluids erfasst und über ein zweites Sensormodul 4 eine Durchflussmenge, beispielsweise mithilfe eines thermischen Durchflusszählers. Im nur schematisch dargestellten Bereich 5 eines Rücklaufs wird über das Sensormodul 6 die Temperatur des rücklaufenden Fluids erfasst. Die Sensormodule 3, 6 zur Temperaturerfassung sind beispielsweise Thermowiderstände.

Um die Sensormodule 3, 4, 6 mit einer Recheneinrichtung 7 zu verbinden, wird eine jeweilige Leitung 8, 9, 10 genutzt. Die Leitungen 8, 9, 10 weisen im Beispiel jeweils zwei Adern 11 bis 16 auf, die recheneinrichtungsseitig mit jeweiligen Sensorkontakten 17 bis 22 verbunden sind. Über diese sind die Adern 11 bis 16 mit einer Verarbeitungsschaltung 23 verbunden, die beispielsweise die Thermowiderstände der Sensormodule 3, 6 bestromt und die daran abfallende Spannung misst bzw. das Sensormodul 4 zur Durchflussmessung betreibt. Hierbei ist es insbesondere bezüglich des Sensormoduls 4 möglich, dass mehr als zwei Adern 13, 14 zum Betrieb des Sensormoduls 4 genutzt werden.

In der gezeigten Messeinrichtung sollen Störungen über ein Referenzpotential, nämlich das Erdpotential, auf dem das Messrohr 2 liegt, abgeführt werden. Hierzu wird in der Leitung 3 eine weitere Ader 24 genutzt, die einerseits eine Sensorkomponente 25, nämlich ein Gehäuse des Sensormoduls 3, und andererseits über den Kontaktpunkt 26 das leitende Gehäuse 27 der Recheneinrichtung 7 niederohmig kontaktiert. Das Gehäuse des Sensormoduls 3 ist in das Messrohr 2 einschraubt und kontaktiert es daher niederohmig. Somit wird durch eine niederohmige Verbindung das Gehäuse 27 der Recheneinrichtung 7 auf das Erdpotential gezogen, auf dem auch das leitendende Messrohr 2 liegt, so dass Störungen über dieses Erdpotential abgeführt werden können.

Die Leitung 8 ist vorzugsweise so ausgebildet, dass die weitere Ader 24 einen Schirm für die Adern 11 und 12 bildet, so dass diese zusätzlich abgeschirmt werden.

Um Störungen, die in die Adern 11 bis 16 eingestreut werden, über das Referenz- bzw. Erdpotential abführen zu können, ist jeder der Sensorkontakte 17 bis 22 in der Recheneinrichtung 7 über eine jeweilige durch einen Kondensator gebildete Kapazität 28 bis 33 mit dem Referenzschaltungsabschnitt 34 verbunden, der durch das leitfähige Gehäuse 27 gebildet wird. Somit sind alle Adern 11 bis 16 kapazitiv mit dem Referenz- bzw. Erdpotential gekoppelt, so dass hochfrequente Störungen über die Kapazitäten 28 bis 33, den durch das Gehäuse 27 gebildeten Referenzschaltungsabschnitt 34, die weitere Ader 24, das Gehäuse des Sensormoduls 3 und das Messrohr 2 abgeführt werden können. Solche Störungen koppeln somit nicht in die Verarbeitungsschaltung 23 ein, sondern werden an dieser vorbei über das Referenzpotential abgeführt.

### Bezugszeichenliste

- 1: Messeinrichtung
- 2: Messrohr
- 3: Sensormodul
- 4: Sensormodul
- 5: Bereich
- 6: Sensormodul
- 7: Recheneinrichtung
- 8: Leitung
- 9: Leitung
- 10: Leitung
- 11: Ader
- 12: Ader
- 13: Ader
- 14: Ader
- 15: Ader
- 16: Ader
- 17: Sensorkontakt
- 18: Sensorkontakt
- 19: Sensorkontakt
- 20: Sensorkontakt
- 21: Sensorkontakt
- 22: Sensorkontakt
- 23: Verarbeitungsschaltung
- 24: Ader
- 25: Sensorkomponente
- 26: Kontaktpunkt
- 27: Gehäuse
- 28: Kapazität
- 29: Kapazität
- 30: Kapazität
- 31: Kapazität
- 32: Kapazität
- 33: Kapazität
- 34: Referenzschaltungsabschnitt

## Patentansprüche

1. Messeinrichtung zur Ermittlung einer ein Fluid und/oder eine Fluidströmung des Fluids betreffenden Fluidgröße, umfassend eine Recheneinrichtung (7) und ein Sensormodul (3, 4, 6) oder mehrere Sensormodule (3, 4, 6) zur Erfassung einer jeweiligen Sensorgröße, in Abhängigkeit der die Fluidgröße durch die Recheneinrichtung (7) ermittelbar ist, wobei das Sensormodul (3, 4, 6) oder die Sensormodule (3, 4, 6) jeweils über wenigstens zwei Adern (11 - 16) an jeweiligen Sensorkontakten (17 - 22) der Recheneinrichtung (7) angeschlossen ist oder sind, wobei wenigstens einer der Sensorkontakte (17 - 22) über eine jeweilige Kapazität (28 - 33) mit einem auf einem Referenzpotential, insbesondere dem Erdpotential, liegenden Referenzschaltungsabschnitt (34) gekoppelt ist, der bezüglich Gleichstrom gegenüber den Sensorkontakten (17 - 22) isoliert ist, wobei das Sensormodul (3) oder eines der Sensormodule (3) eine Sensorkomponente (25) aufweist, die im Einbauzustand leitend mit dem messeinrichtungsextern bereitgestellten Referenzpotential gekoppelt ist,
**dadurch gekennzeichnet, dass** die Sensorkomponente (25) über eine weitere Ader (24) leitend mit dem Referenzschaltungsabschnitt (34) der Recheneinrichtung (7) gekoppelt ist, wobei die Sensorkomponente (25) zumindest einen Abschnitt eines das Fluid aufnehmenden oder von dem Fluid durchströmbaren Messrohrs (2) und/oder eines Gehäuses des Sensormoduls (3), das mit dem leitfähigen Messrohr niederohmig verbunden ist, bildet.

2. Messeinrichtung nach Anspruch 1, **dadurch gekennzeichnet, dass** das die Sensorkomponente (25) aufweisende Sensormodul (3) über eine Leitung (8) mit der Recheneinrichtung (7) gekoppelt ist, die die das Sensormodul (3) mit den Sensorkontakten (17, 18) verbindenden Adern (11, 12) und die weitere Ader (24) umfasst, wobei die weitere Ader (24) eine Abschirmung für jene Adern (11, 12) bildet, die das Sensormodul (3) mit den Sensorkontakten (17, 18) verbinden.

3. Messeinrichtung nach einem der vorangehenden Ansprüche, **dadurch gekennzeichnet, dass** sie einen Durchflusssensor und/oder wenigstens einen Temperatursensor als Sensormodule (3, 4, 6) umfasst.

4. Messeinrichtung nach einem der vorangehenden Ansprüche, **dadurch gekennzeichnet, dass** die Recheneinrichtung (7) dazu eingerichtet ist, einen Durchfluss von Fluid oder eine durch das Fluid transportierte Energiemenge als Fluidgröße zu ermitteln.

5. Messeinrichtung nach einem der vorangehenden Ansprüche, **dadurch gekennzeichnet, dass** jeder der Sensorkontakte (17 - 22) über eine jeweilige Kapazität (28 - 33) mit dem Referenzschaltungsabschnitt (34) gekoppelt ist.

## Claims

1. Measurement device for ascertaining a fluid variable relating to a fluid and/or a fluid flow of the fluid, comprising a computing device (7) and a sensor module (3, 4, 6) or a plurality of sensor modules (3, 4, 6) for acquiring a respective sensor variable, depending on which the fluid variable can be ascertained by the computing device (7), wherein the sensor module (3, 4, 6) or the sensor modules (3, 4, 6) is/are each connected via at least two wires (11-16) in each case to respective sensor contacts (17-22) of the computing device (7), wherein at least one of the sensor contacts (17-22) is coupled via a respective capacitance (28-33) to a reference circuit segment (34) lying at a reference potential, in particular the ground potential, which segment is insulated in respect of direct current from the sensor contacts (17-22), wherein the sensor module (3) or one of the sensor modules (3) comprises a sensor component (25) that, in the installed state, is conductively coupled to the reference potential provided externally to the measurement device, **characterized in that** the sensor component (25) is conductively coupled via a further wire (24) to the reference circuit segment (34) of the computing device (7), wherein the sensor component (25) forms at least a segment of a measurement tube (2) that accommodates the fluid or through which the fluid can flow and/or of a housing of the sensor module (3), which is connected in a low-resistance manner to the conductive measurement tube.

2. Measurement device according to Claim 1, **characterized in that** the sensor module (3) comprising the sensor component (25) is coupled via a lead (8) to the computing device (7) that comprises the wires (11, 12) that connect the sensor module (3) to the sensor contacts (17, 18) and the further wire (24), wherein the further wire (24) forms a screen for the wires (11, 12) that connect the sensor module (3) to the sensor contacts (17, 18).

3. Measurement device according to either of the preceding claims, **characterized in that** it comprises a flow sensor and/or at least one temperature sensor as sensor modules (3, 4, 6).

4. Measurement device according to one of the preceding claims, **characterized in that** the computing device (7) is configured to ascertain a flow rate of fluid or a quantity of energy transported by the fluid as fluid variable.

5. Measurement device according to one of the preceding claims, **characterized in that** each of the sensor contacts (17-22) is coupled via a respective capacitance (28-33) to the reference circuit segment (34).

## Revendications

1. Dispositif de mesure destiné à déterminer une grandeur de fluide relative à un fluide et/ou à un écoulement de fluide du fluide, ledit dispositif comprenant un dispositif de calcul (7) et un module capteur (3, 4, 6) ou plusieurs modules capteurs (3, 4, 6) destinés à détecter une grandeur de capteur respective, en fonction de laquelle la grandeur de fluide peut être déterminée par le dispositif de calcul (7), le module capteur (3, 4, 6) ou les modules capteurs (3, 4, 6) étant relié (s) par le biais d'au moins deux fils (11-16) aux contacts de capteur respectifs (17-22) du dispositif de calcul (7), au moins un des contacts de capteur (17-22) étant couplé par le biais d'une capacité respective (28-33) à une portion de circuit de référence (34) qui est à un potentiel de référence, en particulier au potentiel de masse, et qui est isolée en courant continu des contacts de capteur (17-22), le module capteur (3) ou l'un des modules capteurs (3) comportant un composant de capteur (25) qui, lorsqu'il est installé, est couplé de manière conductrice au potentiel de référence fourni à l'extérieur du dispositif de mesure, **caractérisé en ce que** le composant de capteur (25) est couplé de manière conductrice à la portion de circuit de référence (34) du dispositif de calcul (7) par le biais d'un autre fil (24), le composant de capteur (25) formant au moins une portion d'un tube de mesure (2) qui reçoit le fluide ou à travers lequel le fluide peut s'écouler et/ou d'un boîtier du module capteur (3) qui est relié par une liaison faiblement ohmique au tube de mesure conducteur.

2. Dispositif de mesure selon la revendication 1, **caractérisé en ce que** le module capteur (3) comportant le composant de capteur (25) est couplé par le biais d'une ligne (8) au dispositif de calcul (7) qui comprend les fils (11, 12), reliant le module capteur (3) aux contacts de capteur (17, 18), et l'autre fil (24), l'autre fil (24) formant un blindage pour les fils (11, 12) qui relient le module capteur (3) aux contacts de capteur (17, 18).

3. Dispositif de mesure selon l'une des revendications précédentes, **caractérisé en ce qu'**il comprend un capteur de débit et/ou au moins un capteur de température comme modules capteurs (3, 4, 6).

4. Dispositif de mesure selon l'une des revendications précédentes, **caractérisé en ce que** le dispositif de calcul (7) est conçu pour déterminer un débit de fluide ou une quantité d'énergie transportée par le fluide comme grandeur de fluide.

5. Dispositif de mesure selon l'une des revendications précédentes, **caractérisé en ce que** chacun des contacts de capteur (17-22) est couplé à la portion de circuit de référence (34) par le biais d'une capacité respective (28-33).
